# EUROPEAN PATENT APPLICATION

(11) **EP 2 236 872 A1**
(43) Date of publication of application: **06.10.2010**
(21) Application number: 10158839.0
(22) Date of filing: 31.03.2010
(51) Int. Cl.: F16K 5/06, F16K 5/20, F02M 25/07

(54) **Fluid passage valve and method of assembling same**

(30) Priority: 31.03.2009 JP 2009088102; 31.03.2009 JP 2009088103; 31.03.2009 JP 2009088104
(71) Applicant: Keihin Corporation, Tokyo 163-0539 (JP)
(72) Inventor: Sumiya, Takenori, Tochigi-ken 329-1233 (JP); Sakata, Eisaku, Tochigi-ken 329-1233 (JP); Otaki, Hirotaka, Tochigi-ken 329-1233 (JP)
(74) Representative: Herzog, Markus

(57) **Abstract**

An EGR valve (20) includes a valve housing (22), a ball valve (30), a shaft (86), a valve holder (32) held against the ball valve (30), and a valve seat (52). The valve holder (32) includes a smaller-diameter portion (38), a larger-diameter portion (40), and an annular groove (44) defined between the smaller-diameter portion (38) and the larger-diameter portion (40). The annular groove (44) is smaller in diameter than both the smaller-diameter portion (38) and the larger-diameter portion (40). A chamber (46) is defined between the annular groove (44) and the valve housing (22).

## Description

### BACKGROUND OF THE INVENTION

### Field of the Invention:

The present invention relates to a fluid passage valve, and more particularly to a fluid passage valve for selectively opening and closing a fluid passage through which an exhaust gas flows, which is discharged from an internal combustion engine, for example. The present invention also concerns a method of assembling such a fluid passage valve.

### Description of the Related Art:

As disclosed in Japanese Laid-Open Patent Publication No. 2003-172211, for example, a fluid passage valve of the type described above is used as an exhaust gas passage valve for recirculating an exhaust gas. The disclosed exhaust gas passage valve comprises a ball valve structure having a ball-shaped valve body. Such a ball valve structure allows the fluid passage to have a large cross-sectional area, which minimizes chattering between the valve body and the valve seat. Japanese Laid-Open Patent Publication No. 57-114068 discloses a ball valve including a movable member that keeps a fluid passage hermetically sealed even upon thermal expansion of a valve structure body. The movable member is normally biased in a direction so as to move into abutment against the valve body under resilient forces of a resilient member, which is provided in the ball valve. The movable member functions to retain the valve body and also has a seating function. On the other hand, when the movable member functions only to retain the valve body, the movable member cannot perform a seating function.

Japanese Utility Model Publication No. 51-030016 discloses a fluid passage valve being arranged such that only when a ball valve is closed, a through hole defined in a plug and a communication hole in a ball are brought into fluid communication with each other. The communication hole opens into an outlet hole for discharging a residual liquid from the outlet hole.

According to the related art disclosed in Japanese Laid-Open Patent Publication No. 2003-172211, since the mechanism for opening and closing the ball valve is liable to develop clearances therein, portions of a valve body and a valve seat that are held in sliding contact with each other are partially or entirely made of an elastically deformable material, or a seal ring is mounted on the valve body or the valve seat in order to increase the sealing capability of the valve body or the valve seat. However, inasmuch as portions of the valve body and the valve seat, which are held in sliding contact with each other, serve as a region where the ball valve is angularly moved when the ball valve is opened and closed, the gap between the valve body and the valve seat cannot be sealed completely. In particular, if the fluid handled by the ball valve comprises an exhaust gas, then combustion products are likely to become deposited unexpectedly in the gap. Such deposits are likely to gradually reduce the elasticity of the elastic members without allowing the elastic members to perform sufficiently, thereby reducing the sealing capability of such elastic members.

According to the related art disclosed in Japanese Laid-Open Patent Publication No. 57-114068, a metal seat ring is held against a ball placed in the body of a metal-touch-type ball valve, and is pressed against an inner surface of the body under the resilient force of a spiral spring. When the ball is thermally expanded, the seat ring slides following expansion of the ball. However, since the gap in which the seat ring is disposed is not hermetically sealed, combustion products are likely to be unexpectedly deposited in the gap, similar to the valve ball disclosed in Japanese Laid-Open Patent Publication No. 2003-172211. Almost all of such combustion products that have entered the ball valve are deposited directly in the space where the resilient member is housed, thereby obstructing smooth movement of the resilient member.

According to the fluid passage valve disclosed in Japanese Utility Model Publication No. 51-030016, the passage for discharging the residual liquid has a bent shape extending from an axial hole through a lateral gap, a lower gap, the communication hole, and the through hole to the outside of the valve. If the disclosed fluid passage valve were used as an EGR valve for controlling a flow of exhaust gas from an internal combustion engine, unwanted substances such as combustion products emitted from the internal combustion engine could become deposited in or stick to the passage. Such unwanted substances, when deposited extensively in the valve chamber, are liable to increase frictional resistance between the valve body and the valve chamber, thus making it difficult for the valve body to turn smoothly.

### SUMMARY OF THE INVENTION

It is a general object of the present invention to provide a fluid passage valve, which is highly hermetically sealed and can be used for a long period of time, as a result of being constructed to prevent unwanted substances, which have entered into a valve body from an inlet hole, from becoming deposited in the valve body or in a ball valve. The present invention also provides a method of assembling such a fluid passage valve.

A fluid passage valve according to the present invention includes a ball valve having a through hole defined therein, a valve housing having a first chamber in which the ball valve is rotatably housed, and a first fluid port and a second fluid port, which are disposed respectively upstream and downstream of the first chamber for passage of a fluid therethrough, a shaft that angularly moves the ball valve within the first chamber in order to selectively bring the first fluid port and the second fluid port into and out of fluid communication with each other, a rotational drive source for angularly moving the shaft, a valve holder disposed in the first fluid port and held displaceably in sliding contact with the ball valve, a valve seat disposed in the second fluid port, the ball valve being seated on the valve seat, the valve holder having a movable member on which the ball valve is seatable, and a resilient member that causes the movable member to press the ball valve toward the valve seat, the movable member and the valve housing having a second chamber defined therebetween for receiving unwanted substances flowing from the first fluid port.

In a method of assembling a fluid passage valve according to the present invention, the fluid passage valve includes a ball valve having a through hole defined therein, a valve housing having a first chamber in which the ball valve is rotatably housed, and a first fluid port and a second fluid port which are disposed respectively upstream and downstream of the chamber, and a shaft that angularly moves the ball valve within the chamber in order to selectively bring the first fluid port and the second fluid port into and out of fluid communication with each other, the ball valve having a first hole providing fluid communication between the chamber and the through hole, and the valve housing having a second hole providing fluid communication between the chamber and the outside of the valve housing. The method includes a first step of inserting a rod-shaped member into the first hole and the second hole in order to position the ball valve in the chamber, a second step of connecting and fixing a distal end of the shaft to the ball valve after the first step, a third step of removing the rod-shaped member from the first hole and the second hole after the second step, and a fourth step of fitting a plug member into the second hole in order to close the second hole after the third step.

The above and other objects, features, and advantages of the present invention will become more apparent from the following description when taken in conjunction with the accompanying drawings in which preferred embodiments of the present invention are shown by way of illustrative example.

### BRIEF DESCRIPTION OF THE DRAWINGS

FIG. 1 is a perspective view, partially cut away, of an EGR valve that functions as a fluid passage valve according to a first embodiment of the present invention;
FIG. 2 is an exploded perspective view of the EGR valve shown in FIG. 1;
FIG. 3 is a vertical cross-sectional view of the EGR valve shown in FIG. 1;
FIG. 4 is a sectional perspective view of a ball valve, a distal end of a shaft, and neighboring parts of the EGR valve shown in FIG. 2;
FIG. 5 is a vertical cross-sectional view of the EGR valve shown in FIG. 3, with an exhaust gas inlet port and an exhaust gas outlet port thereof being in fluid communication with each other;
FIG. 6 is an enlarged sectional perspective view of the ball valve and the distal end of the shaft shown in FIG. 4, which are held in engagement with each other;
FIG. 7 is an enlarged cross-sectional view of an EGR valve including a valve holder according to a first modification of the first embodiment;
FIG. 8 is an enlarged cross-sectional view of an EGR valve including a valve holder according to a second modification of the first embodiment;
FIG. 9 is an enlarged cross-sectional view of an EGR valve including a valve holder according to a third modification of the first embodiment;
FIG. 10 is an enlarged cross-sectional view of an EGR valve including a valve holder according to a fourth modification of the first embodiment;
FIG. 11 is a perspective view, partially cut away, of an EGR valve that functions as a fluid passage valve according to a second embodiment of the present invention;
FIG. 12 is an exploded perspective view of the EGR valve shown in FIG. 11;
FIG. 13 is a vertical cross-sectional view of the EGR valve shown in FIG. 11;
FIG. 14 is a sectional perspective view of a ball valve, a distal end of a shaft, and neighboring parts of the EGR valve shown in FIG. 12;
FIG. 15 is a vertical cross-sectional view of the EGR valve shown in FIG. 13, with an exhaust gas inlet port and an exhaust gas outlet port thereof being in fluid communication with each other;
FIG. 16 is an enlarged cross-sectional view of the EGR valve shown in FIG. 11, with a fixing support member thereof being inserted from below a valve housing;
FIG. 17 is a perspective view of a ball valve according to a first modification of the second embodiment;
FIG. 18 is an enlarged cross-sectional view of an EGR valve according to a second modification of the second embodiment;
FIG. 19 is an enlarged cross-sectional view of an EGR valve according to a third modification of the second embodiment;
FIG. 20 is an enlarged cross-sectional view of an EGR valve according to a fourth modification of the second embodiment;
FIG. 21 is an enlarged cross-sectional view of an EGR valve having a passage defined in a valve housing thereof;
FIG. 22A is a characteristic diagram showing the relationship between angular displacement of a ball valve and the opening area of a passage defined in a valve holder, in a case where no auxiliary communication means is provided;
FIG. 22B is a characteristic diagram showing the relationship between angular displacement of a ball valve and the opening area of a passage defined in a valve holder, in a case where an auxiliary communication means is provided in the ball valve; and
FIG. 22C is a characteristic diagram showing the relationship between angular displacement of a ball valve and the opening area of a passage defined in a valve holder, in a case where an auxiliary communication means is provided in the valve holder or in the valve housing.

### DESCRIPTION OF THE PREFERRED EMBODIMENTS

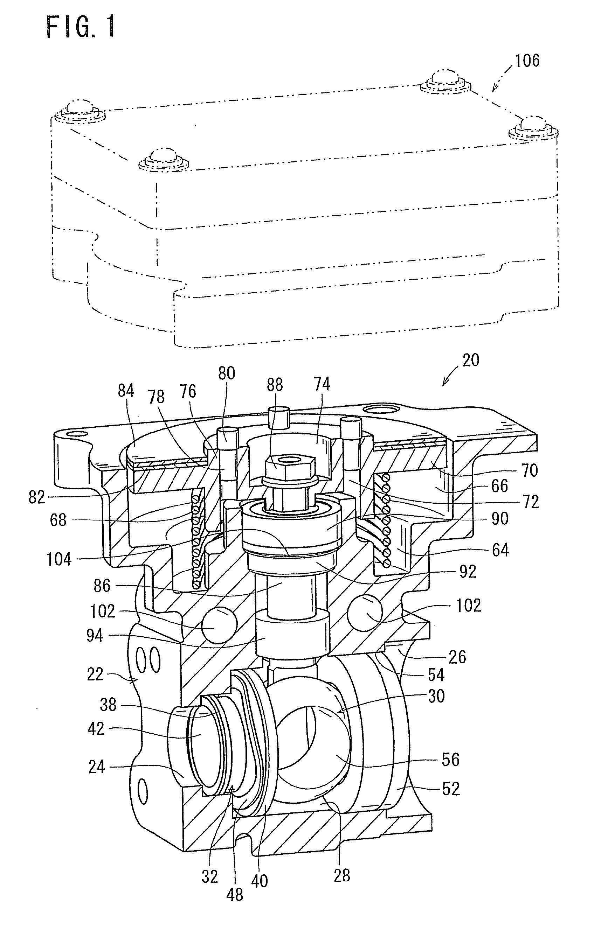

Exhaust gas recirculation valves (hereinafter referred to as "EGR valves"), which serve as fluid passage valves according to preferred embodiments of the present invention, will be described in detail below with reference to the accompanying drawings. FIG. 1 shows an EGR valve 20 according to a first embodiment of the present invention.

As shown in FIGS. 1 through 6, the EGR valve 20 has a valve housing 22 made of aluminum or the like, which includes an exhaust gas inlet port 24 of relatively small diameter defined in one side of a lower portion of the valve housing 22, and an exhaust gas outlet port 26 having a relatively large diameter, which is defined in the opposite side of the lower portion of the valve housing 22. The exhaust gas inlet port 24 and the exhaust gas outlet port 26 selectively are brought into and out of fluid communication with each other. The lower portion of the valve housing 22 also has a communication chamber (first chamber) 28 defined therein between the exhaust gas inlet port 24 and the exhaust gas outlet port 26, and a deformed ball valve 30, which is angularly movably disposed in the communication chamber 28. An annular valve holder 32 is disposed on one side of the communication chamber 28 that communicates with the exhaust gas inlet port 24.

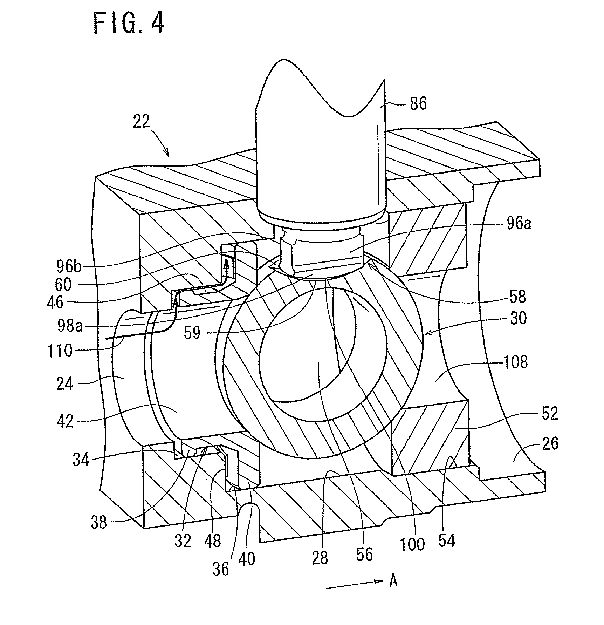

As shown in FIG. 4, the lower portion of the valve housing 22 has an annular step 34 of a smaller diameter and an annular step 36 of a larger diameter, which are interposed between the exhaust gas inlet port 24 and the communication chamber 28. The step 36 is identical in diameter to the communication chamber 28.

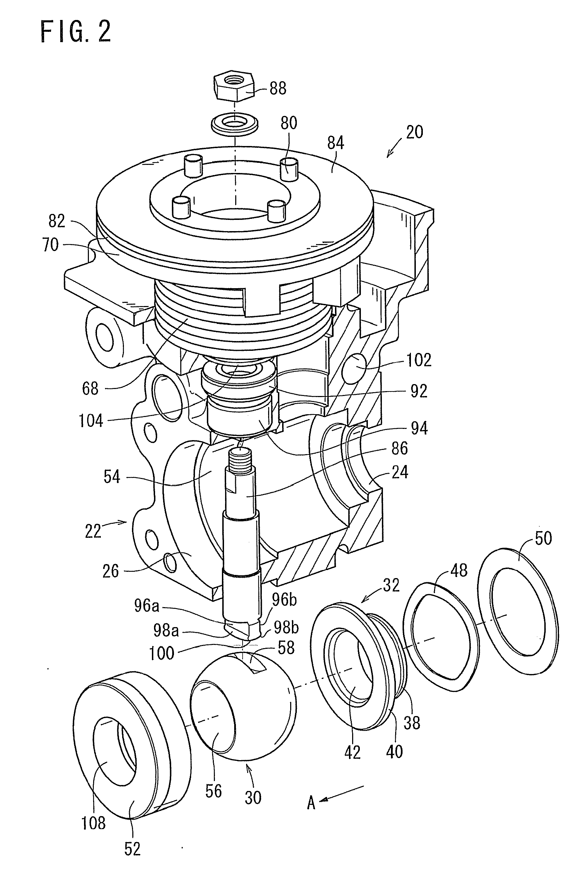

As shown in FIGS. 1 and 2, the valve holder 32 has a smaller-diameter portion 38 disposed on the step 34, and a larger-diameter portion 40 disposed on the step 36 and coaxially joined to the smaller-diameter portion 38. The smaller-diameter portion 38 faces the exhaust gas inlet port 24, while the larger-diameter portion 40 faces the ball valve 30. The valve holder 32 has a passage 42 defined therein, which extends from the smaller-diameter portion 38 to the larger-diameter portion 40.

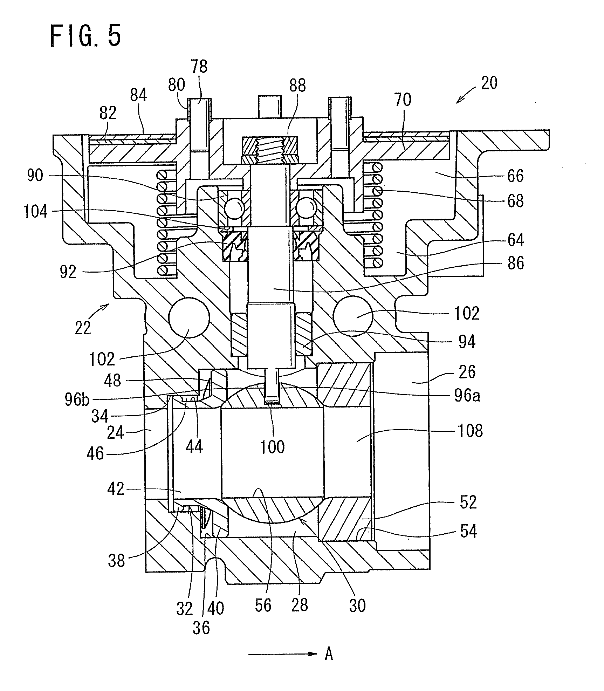

The valve holder 32 also has an annular groove 44 (see FIG. 5) defined in an outer circumferential surface thereof between the smaller-diameter portion 38 and the larger-diameter portion 40. The annular groove 44 includes a tapered groove adjacent to the larger-diameter portion 40. The smaller-diameter portion 38 of the valve holder 32 faces the step 34, and the larger-diameter portion 40 thereof faces the step 36. An annular chamber (second chamber) 46 is defined between the annular groove 44 and the steps 34, 36. The smaller-diameter portion 38 of the valve holder 32 has an outer circumferential edge portion having a semicircular cross section, which is held in line-to-line contact with the step 34. The larger-diameter portion 40 of the valve holder 32 also has an outer circumferential edge portion, which preferably has a semicircular cross section.

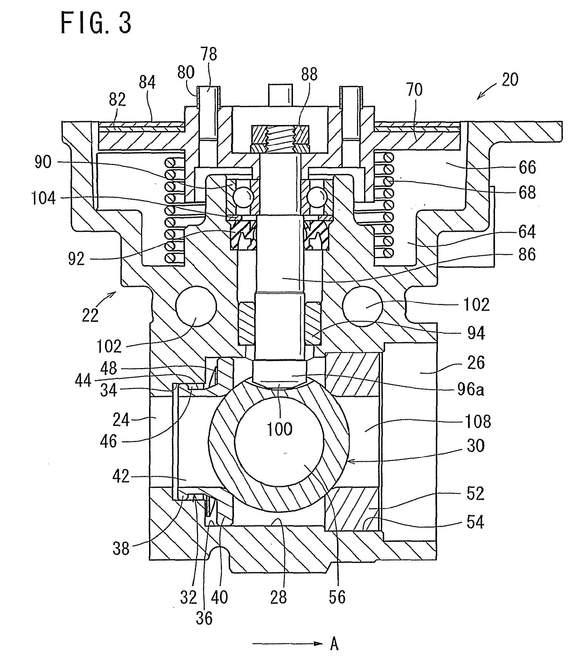

A wave washer (resilient member) 48 is disposed on a side surface of the larger-diameter portion 40 and is held between the larger-diameter portion 40 and the valve housing 22. The valve holder 32 normally is urged resiliently by the wave washer 48 so as to move toward the exhaust gas outlet port 26, in the direction indicated by the arrow A in FIG. 3. No seal member is provided on the outer circumferential surface of the valve holder 32.

As shown in FIG. 2, a plane washer 50 may be disposed on the smaller-diameter portion 38 of the valve holder 32, normally pressing the larger-diameter portion 40 in the direction indicated by the arrow A toward the ball valve 30, thus making it easier for the clearance between the wave washer 48 and the valve housing 22 to be adjusted. A plane washer 50 is preferable because it keeps the wave washer 48 out of direct contact with the valve housing 22, thereby avoiding damage to the valve housing 22.

An annular valve seat 52 is disposed in an opposite side of the communication chamber 28, which communicates with the exhaust gas outlet port 25. The valve seat 52 is fixedly disposed in an annular groove 54 defined in the lower portion of the valve housing 22 between the exhaust gas outlet port 26 and the communication chamber 28.

As shown in FIG. 2, the ball valve 30 comprises a spherical body, which is devoid of two axially opposite circular curved surfaces perpendicular to the central axis thereof, as well as having a through hole 56 defined therein, which extends along the central axis from one axial end to the other. The ball valve 30 has an upper end including a recess 58 having an elongate rectangular shape as viewed in plan, which extends in a direction perpendicular to the through hole 56. As shown in FIGS. 4 through 6, the recess 58 has a curved bottom surface 59 together with a first flat side surface 60 and a second flat side surface 62, which are disposed on each side of the curved bottom surface 59 and extend in parallel to each other.

Structural details of the valve housing 22, which is operatively coupled to an actuator (rotational drive source) 106 for angularly moving the ball valve 30, will be described below.

As shown in FIGS. 1 through 3, the valve housing 22 has a first annular groove 64 of a smaller diameter, and a second annular groove 66 of a larger diameter, which are defined in an upper portion of the valve housing 22. The first annular groove 64 and the second annular groove 66 are held in communication and positioned coaxially with each other. The second annular groove 66 opens outwardly of the valve housing 22. A helical spring 68 is disposed in the first annular groove 64 and the second annular groove 66. A rotational force transmitting plate 70 is disposed over the upper end of the helical spring 68.

The rotational force transmitting plate 70 has a chamber 72 defined centrally therein which opens downwardly, and a chamber 74 defined therein coaxial with and above the chamber 72, which opens upwardly, the chamber 74 being smaller in diameter than the chamber 72. The chamber 74 is surrounded by a thick annular wall 76, having a plurality of equally spaced joint pins 78 mounted thereon. Metal annular tubes 80 are fitted respectively over upper portions of the joint pins 78. A rotor holder 82 is fitted over the wall 76 and placed on the rotational force transmitting plate 70. A rotor 84 in the form of a metal plate is placed on an upper surface of the rotor holder 82. The rotor 84 makes up part of a sensor for detecting the degree at which the rotational force transmitting plate 70 is rotated by the actuator 106.

A shaft 86, which extends downwardly through the valve housing 22 toward the ball valve 30, has an upper end fastened centrally in the chamber 74 by a nut 88. The shaft 86 is smoothly and rotatably supported by a roll bearing 90 mounted in the valve housing 22. A seal 92, which prevents exhaust gases from leaking out along the shaft 86, is disposed around the shaft 86 coaxially with and beneath the roll bearing 90.

Another bearing 94 is disposed around the shaft 86, spaced downwardly a given distance from the seal 92.

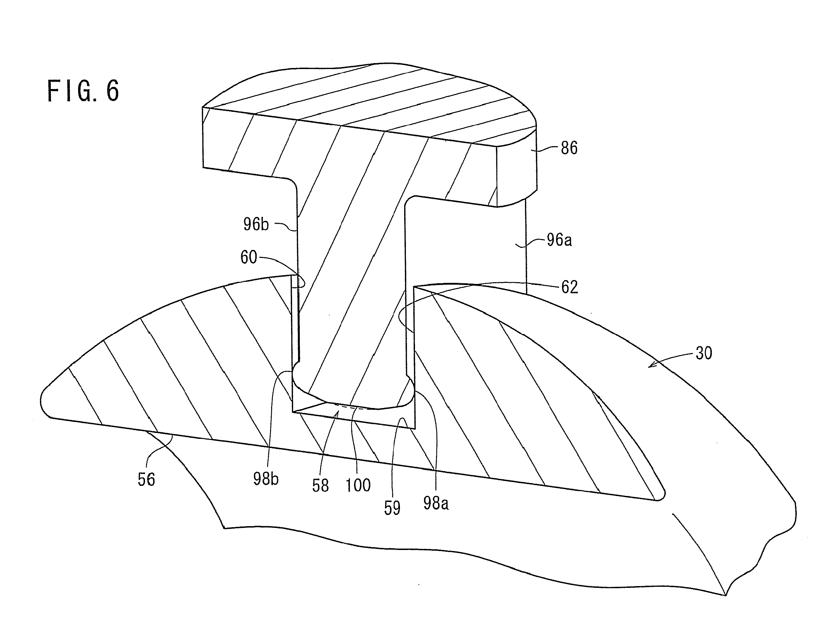

As shown in FIGS. 2 through 6, the shaft 86 has two parallel side faces 96a, 96b on the lower end thereof proximate the ball valve 30. The side faces 96a, 96b terminate downwardly in respective outwardly projecting curved surfaces 98a, 98b. The curved surfaces 98a, 98b have respective lower ends, each of which is joined to an arcuate protruding surface 100, which extends in a direction perpendicular to the directions in which the curved surfaces 98a, 98b project. When the shaft 86 is assembled in position, the protruding surface 100, the curved surfaces 98a, 98b, and the side faces 96a, 96b are fitted into the recess 58 of the ball valve 30. The arcuate protruding surface 100 may be replaced with a partially flat protruding surface, as shown in FIG. 6.

The valve housing 22 has a hole 102 defined therein connected to a coolant supply pipe, not shown, for forcibly cooling the EGR valve 20. An annular metal holder plate 104 is disposed around the shaft 86 between the seal 92 and the roll bearing 90. The actuator 106 serves to angularly move the shaft 86 about its own axis. The actuator 106 is fixedly mounted on an upper portion of the valve housing 22 in covering relation to the rotor 84.

The EGR valve 20 according to the first embodiment is basically constructed as described above. Operations and advantages of the EGR valve 20 will be described below.

When the actuator 106, e.g., a rotary actuator, is energized, the rotational force thereof is transmitted to the joint pins 78, which are covered by the metal annular tubes 80. Since the joint pins 78 are covered by the metal annular tubes 80, the joint pins 78 are protected against excessive frictional wear, even when the actuator 106 is repeatedly energized to transmit the rotational force thereof to the joint pins 78. When rotational force is transmitted to the joint pins 78, the rotational force transmitting plate 70 is angularly moved about its own axis. Angular displacement of the rotational force transmitting plate 70 is detected by the rotor 84, and the rotational force of the rotational force transmitting plate 70 is transmitted to the shaft 86, the upper end of which is fastened by the nut 88 to the rotational force transmitting plate 70.

The parallel side surfaces 96a, 96b, the curved surfaces 98a, 98b, and the protruding surface 100 on the lower end of the shaft 86 are tightly fitted into the recess 58 of the ball valve 30. Therefore, the ball valve 30 can be angularly moved quickly without delay in response to the rotational force transmitted from the shaft 86. When the ball valve 30 is turned from a closed state (see FIG. 3), in which the ball valve 30 is held in intimate contact with the end of the passage 108 in the valve seat 52, thereby disconnecting the passages 42, 56 from each other to result in the open state shown in FIG. 5, then the passage 42 connected to the exhaust gas inlet port 24 is placed in fluid communication with the through hole 56 in the ball valve 30, while the through hole 56 is placed in fluid communication with the passage 108 in the valve seat 52. Therefore, when exhaust gases emitted from the internal combustion engine (not shown) reach the exhaust gas inlet port 24, the exhaust gases flow through the passage 42, the through hole 56, and the passage 108, and flow into the exhaust gas outlet port 26.

In order to turn the ball valve 30 to result in the closed state, the rotational force from the actuator 106 is transmitted to the joint pins 78, which turn the rotational force transmitting plate 70. Angular displacement of the rotational force transmitting plate 70 is detected by the rotor 84. The rotational force transmitting plate 70 causes the shaft 86 to turn about its own axis, so as to angularly move the ball valve 30 to the closed position shown in FIG. 3. At this time, the ball valve 30 fully closes the passage 108 in the valve seat 52, thereby preventing exhaust gases emitted from the internal combustion engine (not shown) from flowing into the exhaust gas outlet port 26.

Even after the ball valve 30 has been closed, the exhaust gases emitted from the internal combustion engine continue to flow through the exhaust gas inlet port 24 into the passage 42. At this time, since the ball valve 30 is closed, the exhaust gases become trapped in the passage 42. As described above, since the outer circumferential edge portion of the smaller-diameter portion 38 of the valve holder 32 has a semicircular cross section, which is held in line-to-line contact with the step 34 of the valve housing 22, the smaller-diameter portion 38 prevents exhaust gases from entering into the valve housing 22. Moreover, minute carbon particles contained in the exhaust gas, which become attached to the inner circumferential surface of the step 34, are scraped off when the valve holder 32 slides against the valve housing 22. Nevertheless, a small amount of exhaust gas still tends to leak along a leakage path 110 into the chamber 46 through a small clearance between contacting surfaces of the smaller-diameter portion 38 and the valve housing 22, as indicated by the solid-line arrow in FIG. 4.

According to the first embodiment, when exhaust gas has leaked from the exhaust gas inlet port 24 along the leakage path 110 and over the outer circumferential surface of the smaller-diameter portion 38 into the chamber 46, the exhaust gas flows into the chamber 46 in the leakage path 110 where the fluid resistance is smaller. Therefore, minute carbon particles contained in the leaking exhaust gas mainly are deposited in the chamber 46, and such carbon particles are prevented from becoming deposited near the wave washer 48, which is positioned in the leakage path 110. The resilient force of the wave washer 48 thus is maintained at a normal level over a long period of time, and the wave washer 48 keeps the exhaust gas outlet port 26 reliably and hermetically sealed by the ball valve 30 when the ball valve 30 is closed.

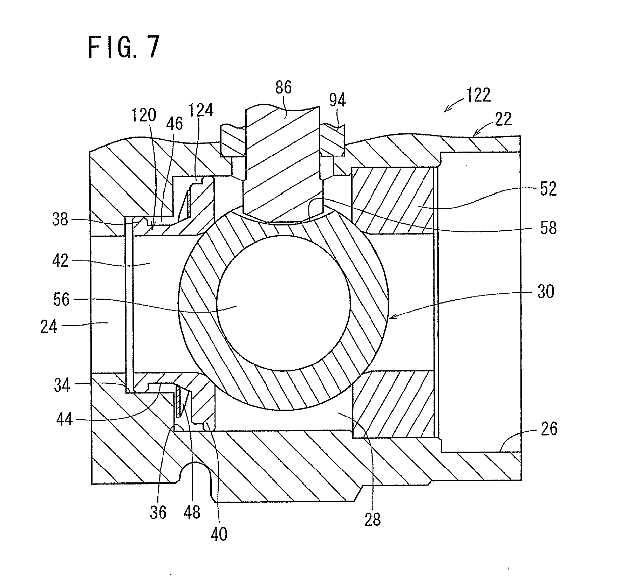

Valve holders 120, 130, 140, 160 according to first through fourth modifications of the first embodiment will be described below with reference to FIGS. 7 through 10, respectively. Those parts of the valve holders 120, 130, 140, 160 as well as neighboring parts thereof which are identical to those of the EGR valve 20 shown in FIGS. 1 through 6 are denoted by identical reference characters, and such features will not be described in detail below.

FIG. 7 is an enlarged cross-sectional view of a valve holder 120 according to a first modification of the first embodiment, and an EGR valve 122 including the valve holder 120. As shown in FIG. 7, the valve holder 120 according to the first modification includes an annular recess 124 defined in a surface of the larger-diameter portion 40, which faces the exhaust gas inlet port 24. The annular recess 124 increases the volume of the chamber 46 for enabling more minute carbon particles contained in the exhaust gas, which has leaked from the exhaust gas inlet port 24, to become deposited in the chamber 46.

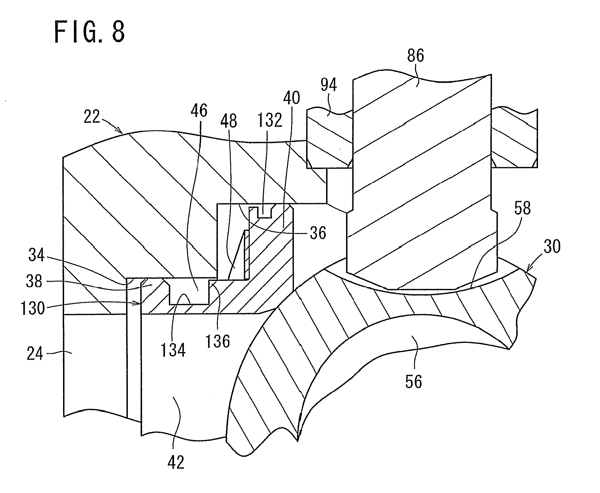

FIG. 8 shows an enlarged cross section of a valve holder 130 according to a second modification of the first embodiment. As shown in FIG. 8, the valve holder 130 includes an annular groove 132 defined in an outer circumferential surface of the larger-diameter portion 40, and a deeper annular groove 134 defined in the outer circumferential surface of the valve holder 130 between the smaller-diameter portion 38 and the larger-diameter portion 40. One side of the deeper annular groove 134, which is closer to the larger-diameter portion 40, is defined by a sharply rising straight block wall 136. Since the volume of the chamber 46 is increased by the annular groove 134, and since one side of the annular groove 134 is defined by the sharply rising straight block wall 136, minute carbon particles contained within the exhaust gas that has leaked from the exhaust gas inlet port 24 do not become scattered, but are efficiently deposited in the chamber 46. The block wall 136 may extend to corners of the step 34 and into sliding contact with the surface that defines the step 34. If the block wall 136 extends to the corners of the step 34 and into sliding contact with the surface defining the step 34, then when the valve holder 130 slides against the valve housing 22, the valve holder 130 and the housing 22 slide against each other under high pressure, thereby effectively scraping off minute carbon particles, which have been deposited on the valve body 22 in the chamber 46.

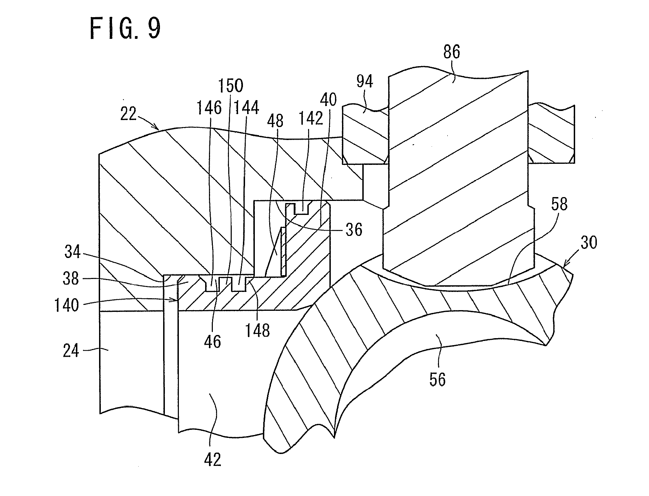

FIG. 9 shows an enlarged cross section of a valve holder 140 according to a third modification of the first embodiment. As shown in FIG. 9, the valve holder 140 includes a first annular groove 142 defined in an outer circumferential surface of the larger-diameter portion 40, and a second annular groove 144 and a third annular groove 146, each having a diameter smaller than the smaller-diameter portion 38, defined in an outer circumferential surface of the valve holder 140 between the smaller-diameter portion 38 and the larger-diameter portion 40. One side of the second annular groove 144, which is closer to the larger-diameter portion 40, is defined by a sharply rising straight block wall 148, while the other side of the second annular groove 144 and one side of the third annular groove 146, which is closer to the second annular groove 144, are defined by a sharply rising straight block wall 150 positioned between the second annular groove 144 and the third annular groove 146. Since the volume of the chamber 46 is increased by the second annular groove 144 and the third annular groove 146, and since sides of the second annular groove 144 and the third annular groove 146 are defined by the sharply rising straight block walls 148, 150, minute carbon particles contained within the exhaust gas that has leaked from the exhaust gas inlet port 24 do not become scattered, but are efficiently deposited in the chamber 46.

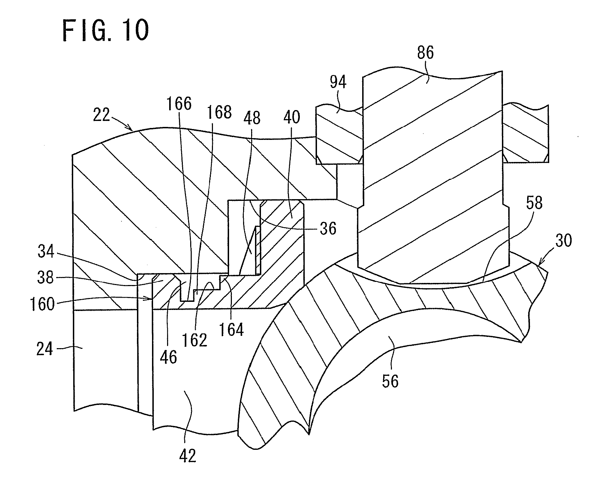

FIG. 10 shows an enlarged cross section of a valve holder 160 according to a fourth modification of the first embodiment. As shown in FIG. 10, the valve holder 160 includes a first annular groove 162 defined in an outer circumferential surface thereof between the smaller-diameter portion 38 and the larger-diameter portion 40. One side of the first annular groove 162, which is closer to the larger-diameter portion 40, is defined by a sharply rising straight block wall 164. A second annular groove 166 is defined in the outer circumferential surface thereof adjacent to the first annular groove 162 and more closely to the smaller-diameter portion 38, wherein the second annular groove 166 is deeper than the first annular groove 162. One side of the second annular groove 166, which is closer to the larger-diameter portion 40, is defined by a sharply rising straight block wall 168. The volume of the chamber 46 is increased by the second annular groove 166, which is deeper than the first annular groove 162. Further, since sides of the first annular groove 162 and the second annular groove 166 are defined by the sharply rising straight block walls 164, 168, minute carbon particles contained within the exhaust gas that has leaked from the exhaust gas inlet port 24 do not become scattered, but are efficiently deposited in the chamber 46. Further, when the valve holder 160 slides against the valve housing 22, minute carbon particles, which have been deposited on the valve body 22 in the chamber 46, are effectively scraped off.

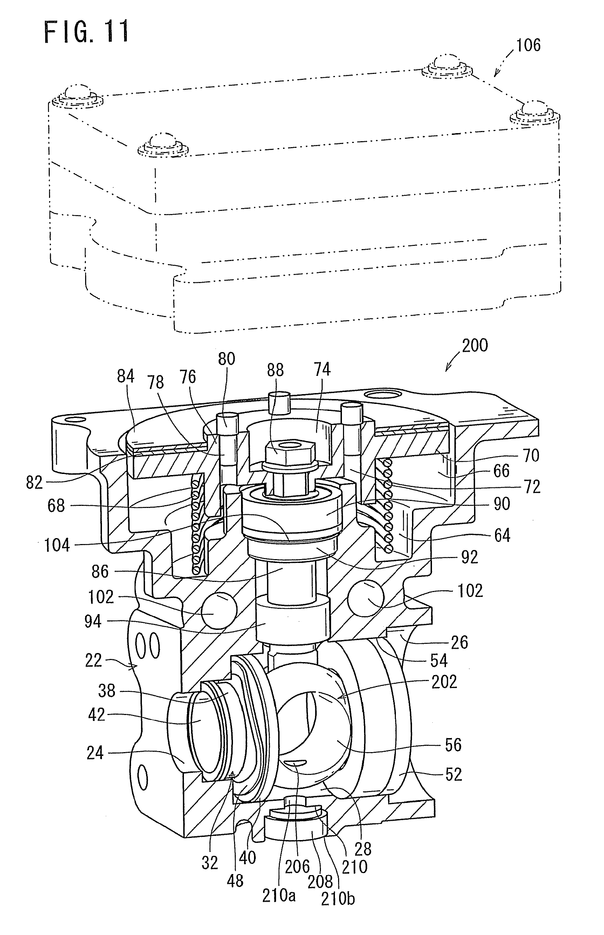

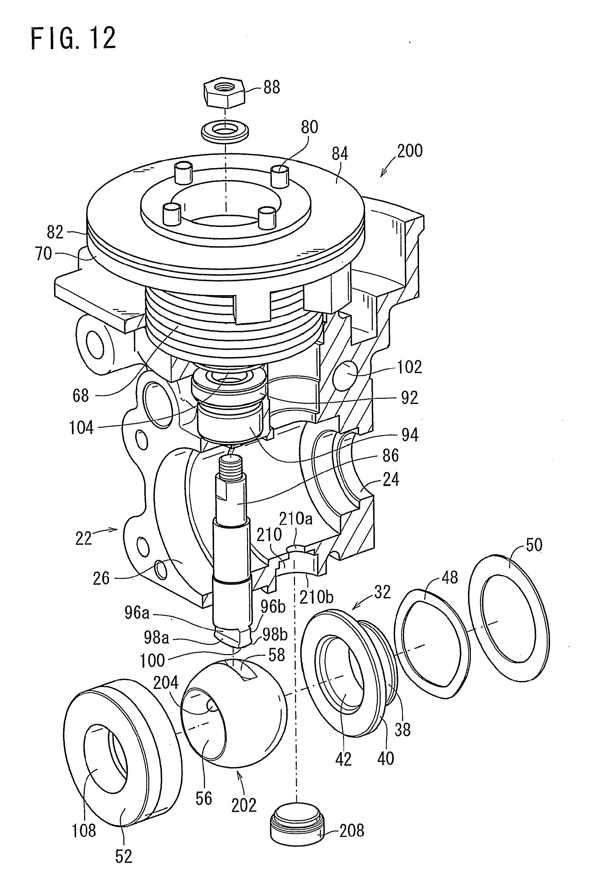

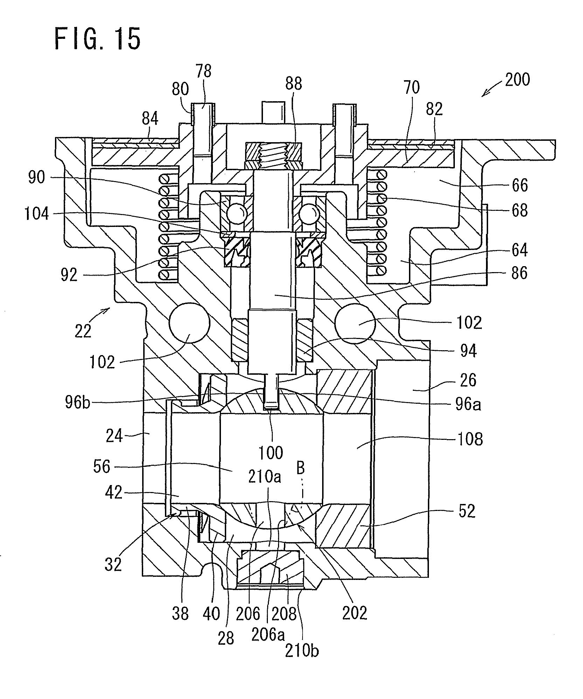

An EGR valve 200 that functions as a fluid passage valve according to a second embodiment of the present invention is illustrated in FIGS. 11 through 15. Those parts of the EGR valve 200 which are identical to those of the EGR valve 20 according to the first embodiment are denoted by identical reference characters, and such features will not be described in detail below.

As shown in FIGS. 11 through 14, the EGR valve 200 according to the second embodiment includes a ball valve 202 having a first hole 204 defined therein, which extends substantially perpendicularly to the axis of the through hole 56, and having an opening whose cross-sectional area is smaller than the through hole 56. The first hole 204 provides fluid communication between the exhaust gas inlet port 24 and the through hole 56 via the passage 42 only when the ball valve 202 is closed. The ball valve 202 also includes a second hole 206 defined therein, which extends perpendicularly to the through hole 56 and the first hole 204. The first hole 204 and the second hole 206 have circular shapes in cross-section.

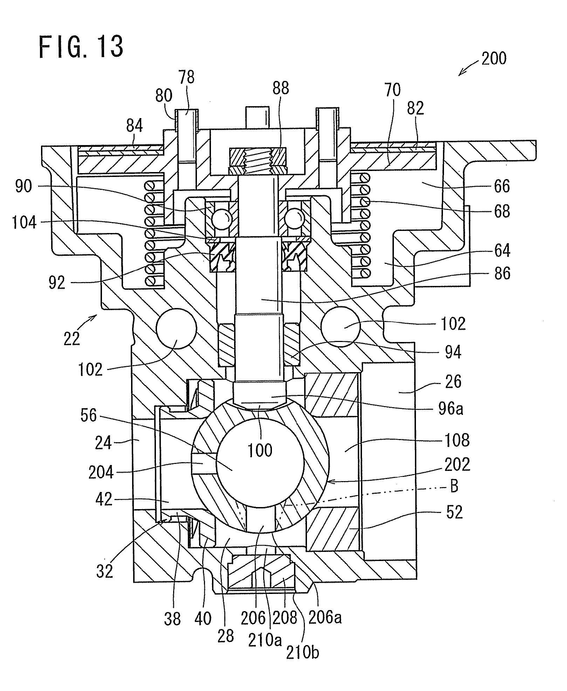

When the ball valve 202 is angularly moved by the shaft 86 to result in an open state, the through hole 56 is brought into fluid communication with the passage 42 in the valve holder 32, and also with the passage 108 in the valve seat 52. The first hole 204 serves to receive exhaust gas delivered under a given pressure from the exhaust gas inlet port 24, so that the exhaust gas will not be applied to other regions of the EGR valve 200. The second hole 206 serves to receive minute carbon particles, which become deposited in the through hole 56 of the ball valve 202. The second hole 206 may be of a tapered shape, which becomes progressively larger in diameter toward the through hole 56, as indicated by the imaginary lines B in FIG. 13. The second hole 206, which is of a tapered shape, is capable of easily accepting unwanted substances therein, and further makes it difficult for such unwanted substances to become deposited therein.

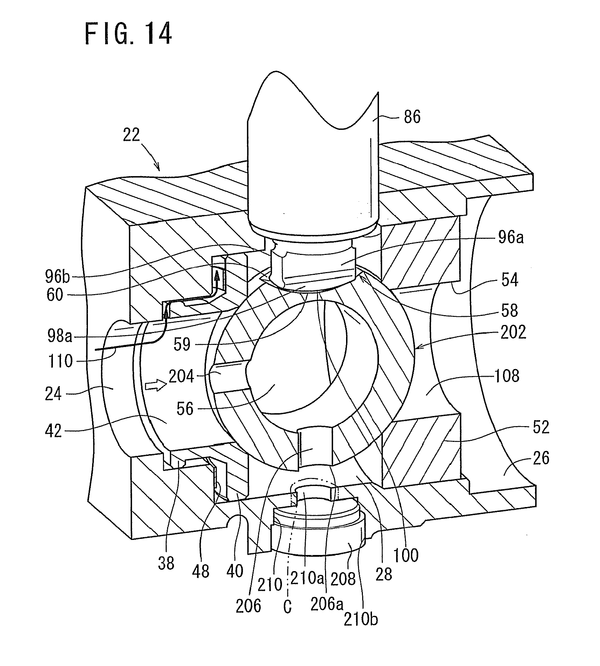

The first hole 204 has an opening, the cross-sectional area of which should be of a size with (i.e., suitable for) a fluid resistance that is much smaller than the fluid resistance of the leakage path 110, which extends from the outer circumferential surface of the smaller-diameter portion 38, through the plain washer 50 and the wave washer 48, and to the outer circumferential surface of the larger-diameter portion 40. Accordingly, exhaust gas delivered from the exhaust gas inlet port 24 flows almost entirety into the first hole 204, as indicated by the arrow in FIG. 14.

The valve housing 22 has a drain hole (second hole) 210 defined therein at a position directly below the second hole 206. A blank plug (plug member) 208 is fitted into the drain hole 210. The drain hole 210 is used to remove minute carbon particles, etc., deposited in the through hole 56 of the ball valve 202 when necessary.

The drain hole 210 has an opening 210a that communicates with the communication chamber 28, and an opening 210b that opens outwardly of the valve housing 22. The opening 210b may be larger in diameter than the opening 210a. The larger diameter opening 210a allows an instrument or the like to be easily inserted therein from outside of the valve housing 22, whereby the instrument can be inserted into the drain hole 210 for removing unwanted substances from the through hole 56 of the ball valve 202.

Alternatively, the opening 210a may be larger in diameter than the opening 210b, as indicated by the imaginary line C in FIG. 14. Such a larger opening 210a allows unwanted substances carried from the through hole 56 in the ball valve 202 and through the second hole 206 to be efficiently introduced into the drain hole 210.

For closing the EGR valve 200, rotational force from the actuator 106 is transmitted to the joint pins 78, which turn the rotational force transmitting plate 70, the angular displacement of which is detected by the rotor 84. The rotational force transmitting plate 70 causes the shaft 86 to turn about its own axis, thereby angularly moving the ball valve 202 to the closed position shown in FIGS. 13 and 14. At this time, the ball valve 202 fully closes the passage 108 in the valve seat 52, thus preventing exhaust gases emitted from the internal combustion engine (not shown) from flowing through the through hole 56 and into the exhaust gas outlet port 26.

Immediately after the valve seat 52 has been closed by the ball valve 202, exhaust gas emitted from the internal combustion engine can reach the exhaust gas inlet port 24. When the exhaust gas reaches the ball valve 202, and the exhaust gas flows through the first hole 204 and into the through hole 56, the exhaust gas becomes trapped. In some cases, minute carbon particles contained within the exhaust gas that is trapped in the through hole 56 may also be deposited in the second hole 206. Such deposited minute carbon particles can be removed from the second hole 206 and the ball valve 202 when the blank plug 208 is detached from the drain hole 210.

According to the second embodiment, the second hole 206, which provides fluid communication between the through hole 56 in the ball valve 202 and the communication chamber 28, and the drain hole 210 disposed closely below the second hole 206, which provides fluid communication between the communication chamber 28 and the outside of the valve housing 22, are disposed coaxially with each other. Therefore, unwanted substances such as minute carbon particles, which are emitted from the internal combustion engine and become deposited in the ball valve 202 and the valve housing 22, can be discharged through the second hole 206 and the drain hole 210. As a result, the ball valve 202 and the valve housing 22 can easily be serviced. Accordingly, such unwanted substances are prevented from remaining deposited in or sticking to the valve housing 22, thus allowing the exhaust gas to flow at a required level through the EGR valve 200 when the ball valve 202 is open.

Since unwanted substances deposited within the communication chamber 28, etc., or unwanted substances sticking to the larger-diameter portion 40 or the valve seat 52 or the like can be removed in order to avoid the possibility of resistance to rotation of the ball valve 202, the torque required to turn the ball valve 202 can be prevented from increasing.

A method of assembling the EGR valve 200 will be described below.

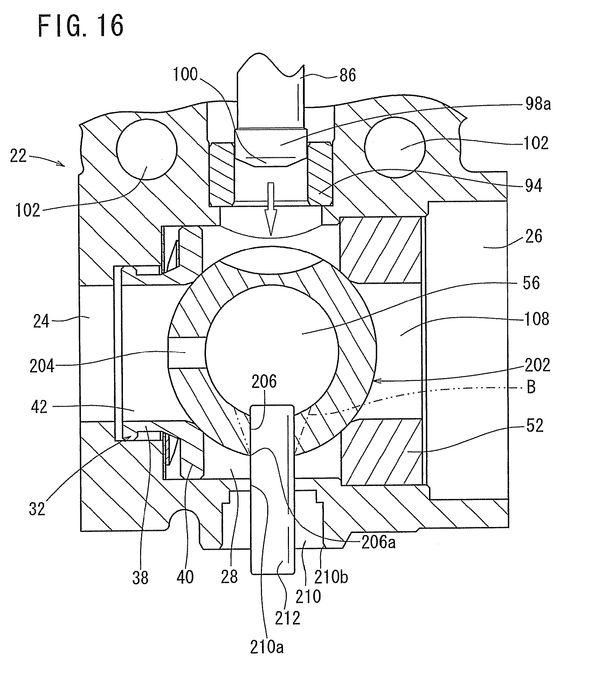

As shown in FIG. 16, in step S1 (first step), the ball valve 202 is positioned so as to hold the second hole 206 in coaxial alignment with the drain hole 210 in the valve housing 22, and a fixing support member 212, to be described later, is inserted from below into the drain hole 210 and the second hole 206. At this time, the ball valve 202 is secured to the valve housing 22. Inasmuch as the second hole 206 and the drain hole 210 are defined respectively in the ball valve 202 and the valve housing 22, such that the ball valve 202 and the valve housing 22 are disposed in a predetermined relative positional relationship with respect to the fixing support member 212 that is inserted in the drain hole 210 and the second hole 206, the ball valve 202 and the valve housing 22 can be relatively positioned with respect to each other as desired.

In step S2 (second step), as shown in FIGS. 14 and 16, the distal end of the shaft 86 is fitted into the recess 58 of the ball valve 202, as indicated by the arrow in FIG. 16. Since the ball valve 202 has already been secured with respect to the valve housing 22 in step S1, the ball valve 202 is prevented from becoming displaced in position by forces applied when the distal end of the shaft 86 is fitted into the recess 58.

The recess 58 is defined in the ball valve 202 such that the ball valve 202 and the shaft 86 are disposed in a predetermined relative positional relationship when the distal end of the shaft 86 is fitted into the recess 58. Therefore, the ball valve 202 and the shaft 86 can be relatively positioned with respect to each other as desired.

In step S3 (third step), after step S2, while the ball valve 202 and the shaft 86 remain relatively positioned with respect to each other, the fixing support member 212 is removed downwardly from the second hole 206 and the drain hole 210.

In step S4 (fourth step), the blank plug 208 is fitted into the drain hole 210.

As described above, since the ball valve 202 and the valve housing 22 are relatively positioned with respect to each other as desired in step S1, and since the ball valve 202 and the shaft 86 are relatively positioned with respect to each other as desired in step S2, after steps S1 and S2 are preformed, the valve housing 22, the ball valve 202, and the shaft 86 can all be relatively positioned with respect to each other highly accurately and efficiently. Accordingly, the ball valve 202 is prevented from becoming assembled in an off-centered manner with respect to the shaft 86. As a result, the torque required to turn the ball valve 202 of the EGR valve 200 can be prevented from increasing.

If the opening 210a of the drain hole 210, which communicates with the communication chamber 28, is of the same shape and dimension as the opening 206a of the second hole 206, which communicates with the communication chamber 28, then the ball valve 202 and the valve housing 22 can be relatively positioned with respect to each other highly accurately.

The fixing support member 212 may be made of any material, insofar as the fixing support member 212 is in the form of a shank (rod-shaped member) having an appropriate thickness. The fixing support member 212 is identical in cross-sectional shape to the opening 210a of the drain hole 210, which communicates with the communication chamber 28, and the opening 206a of the second hole 206, which communicates with the communication chamber 28. However, the fixing support member 212 should be slightly smaller in cross-sectional size than the openings 210a, 206a, for facilitating unobstructed insertion into and removal from the drain hole 210 and the second hole 206.

Therefore, the fixing support member 212 can easily be inserted into and removed from the drain hole 210 and the second hole 206. However, the fixing support member 212 still is capable of holding the ball valve 202 and the valve housing 22 in a highly accurate relative positional relationship.

The above method of assembling the EGR valve 200 is not limited to being carried out when the EGR valve 200 is initially assembled for the first time, but rather, the method steps may be carried out upon reassembling the EGR valve 200, after it has been disassembled for carrying out maintenance thereon.

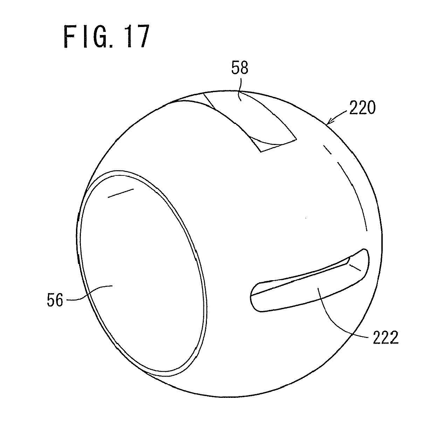

Valve holders 220, 230, 240, 250 according to first through fourth modifications of the second embodiment will be described below with reference to FIGS. 17 through 22, respectively. Parts of the valve holders 220, 230, 240, 250 and neighboring parts thereof, which are identical to those of the EGR valve 200 shown in FIGS. 11 through 16, are denoted by identical reference characters, and such features will not be described in detail below.

FIG. 17 is a perspective view of a ball valve 220 according to a first modification of the second embodiment. As shown in FIG. 17, the ball valve 220 has a first elongate hole 222 defined in an outer circumferential surface thereof, which extends along the axis of the ball valve 220. The first hole 222 is held in fluid communication with the through hole 56. The first elongate hole 222 includes an opening, the cross-sectional area of which is greater than the cross-sectional area of the opening of the first hole 204 in the EGR valve 200 according to the second embodiment. Therefore, the first elongate hole 222 can receive more of the exhaust gas delivered from the exhaust gas inlet port 24.

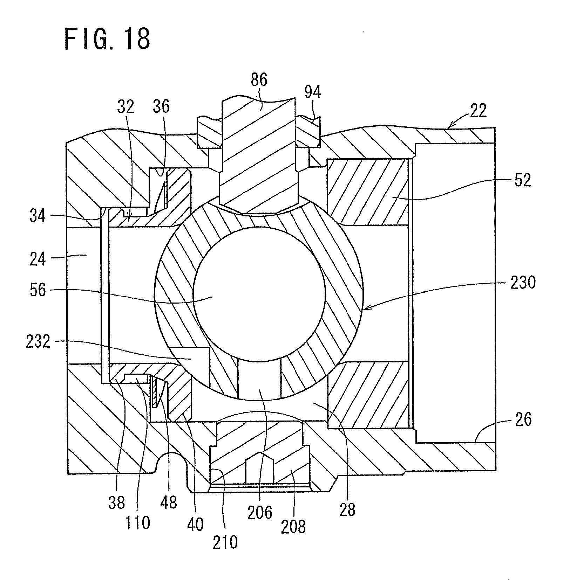

FIG. 18 shows an enlarged cross section of a ball valve 230 and neighboring parts thereof according to a second modification of the second embodiment. As shown in FIG. 18, the ball valve 230 includes a groove 232 defined in an outer circumferential surface thereof around the axis of the ball valve 230. When the ball valve 230 is closed, the groove 232 provides fluid communication between the exhaust gas inlet port 24 and the communication chamber 28. In other words, when the ball valve 230 is closed, the groove 232 is positioned so as to keep the ball valve 230 clear of the larger-diameter portion 40 of the valve holder 32. Therefore, when the ball valve 230 is closed, exhaust gases delivered from the exhaust gas inlet port 24 flow through the groove 232 and into the communication chamber 28, rather than entering into the narrow leakage path 110.

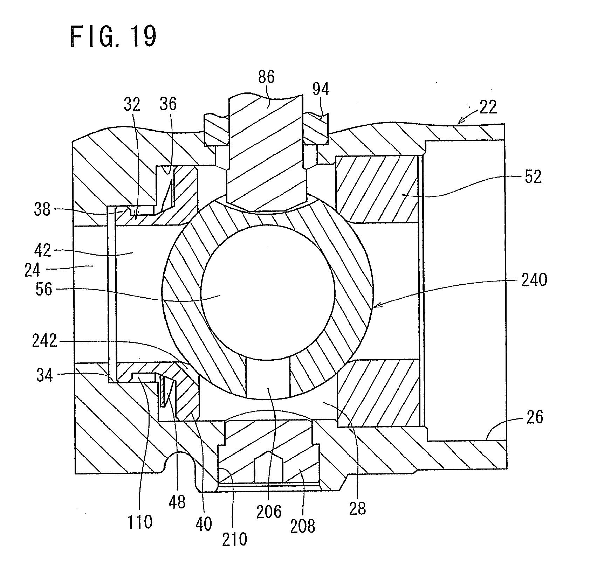

FIG. 19 shows an enlarged cross section of a ball valve 240 and neighboring parts thereof according to a third modification of the second embodiment. As shown in FIG. 19, the larger-diameter portion 40 of the valve holder 32 includes a recess 242, which is disposed laterally to the second hole 206 in the ball valve 240. In other words, the recess 242 is positioned in order to keep the larger-diameter portion 40 clear of the ball valve 240. When the ball valve 240 is closed, exhaust gas delivered from the exhaust gas inlet port 24 flows through the passage 42 and the recess 242, and into the communication chamber 28. Since exhaust gas is released through the recess 242, the exhaust gas is prevented from entering into the narrow leakage path 110. The ball valve 240 includes the second hole 206 only, and does not have a first hole defined therein.

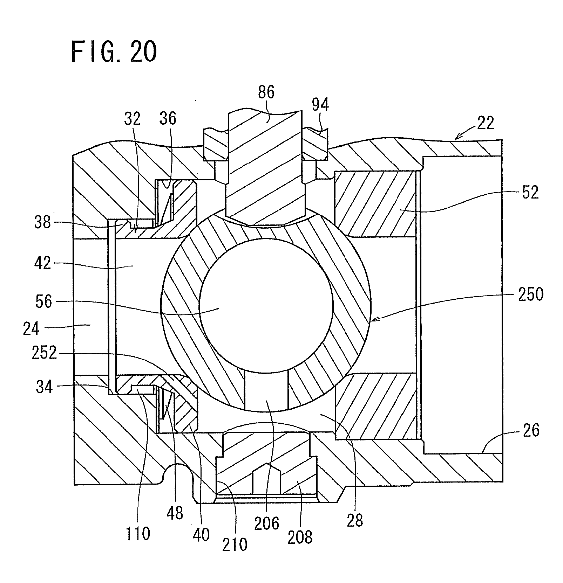

FIG. 20 shows an enlarged cross section of a ball valve 250 and neighboring parts thereof according to a fourth modification of the second embodiment. As shown in FIG. 20, the larger-diameter portion 40 of the valve holder 32 has a small-diameter passageway 252 defined therein, which provides fluid communication between the passage 42 and the communication chamber 28. The passageway 252 operates in the same way and offers the same advantages as the recess 242 shown in FIG. 19. The ball valve 250 includes the second hole 206 only, and does not have a first hole defined therein.

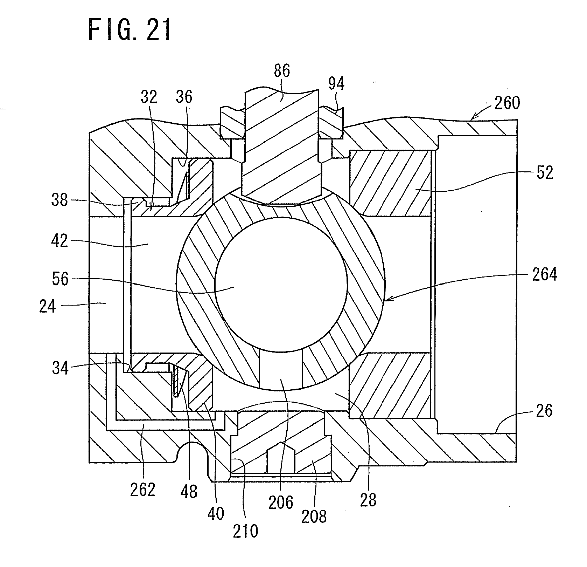

As shown in FIG. 21, a valve housing 260 of an EGR valve, i.e., a fluid passage valve, may have a small-diameter bypass passageway 262 defined therein, which extends in bypassing relation to the valve holder 32. The bypass passageway 262 has one end that opens into the exhaust gas inlet port 24, and an opposite end that opens into the communication chamber 28 near the blank plug 208. The ball valve 264 includes the second hole 206 only, and does not have a first hole defined therein.

Regardless of whether the ball valve 264 is opened or closed, exhaust gases are introduced directly from the exhaust gas inlet port 24 into the communication chamber 28. Therefore, exhaust gases are prevented from entering into the narrow leakage path 110. Stated otherwise, minute carbon particles contained within the exhaust gas do not become deposited in or adhere to the leakage path 110, and the wave washer 48 is prevented from deteriorating or having the resilient force thereof weakened.

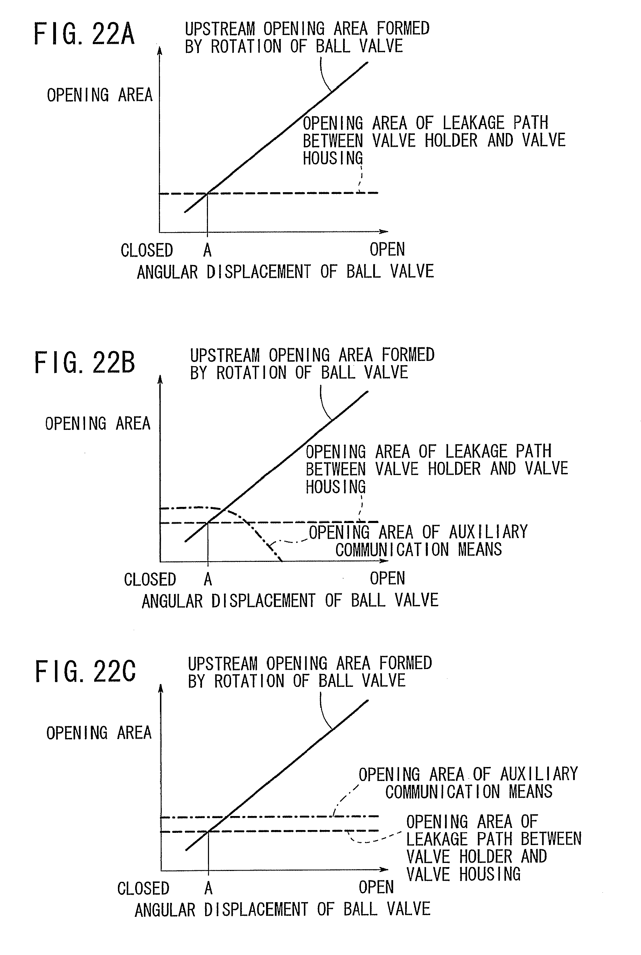

The relationship between angular displacement of the ball valve 202 and the opening area of the passage 42 in the valve holder 32, which is connected to the exhaust gas inlet port 24, will be described below with reference to FIGS. 22A through 22C. Generally, the gap between the smaller-diameter portion 38 of the valve holder 32 and the smaller-diameter step 34, as well as the gap between the larger-diameter portion 40 of the valve holder 32 and the larger-diameter step 36, are both very small, and hence, the gaps have a very large resistance to flow of the exhaust gas. The relationship shown in FIGS. 22A through 22C is premised on such very small gaps.

FIG. 22A shows the relationship for an EGR valve 20 with a ball valve 30, which is free of any auxiliary communication means such as the first hole shown in FIGS. 1 through 3. FIG. 22A shows that as the angular displacement of the ball valve 30 increases, the opening area of the passage 42 gradually increases. FIG. 22A also indicates that the opening area of the leakage passage 110 is constant. Until the angular displacement of the ball valve 30 reaches a given angle A, the opening area of the passage 42, which is created upstream of the ball valve 30 upon rotation of the ball valve 30, remains smaller than the opening area of the leakage passage 110. Therefore, below the angle A, exhaust gas leaks into the leakage path 110.

FIG. 22B shows the relationship for an EGR valve 200 with the ball valve 220, which includes the first elongate hole 222 as an auxiliary communication means. As shown in FIG. 22B, at all times until the angular displacement of the ball valve 220 reaches the angle A, the opening area of the auxiliary communication means (first hole 222) is greater than the opening area of the leakage passage 110. Therefore, even though the ball valve 220 closes the exhaust gas inlet port 24, exhaust gas flows into the first hole 222 but not into the leakage path 110.

FIG. 22C shows the relationship for EGR valves having the recess 242, the small-diameter passage 252, and the bypass passageway 262 as an auxiliary communication means, which are defined respectively in the valve holder 32 and the valve housings 22, 260, rather than in the ball valves 240, 250, 264. FIG. 22C indicates that the opening area of the auxiliary communication means is constant, irrespective of the angular displacement of the ball valves 240, 250, 264. Since the opening area of the auxiliary communication means is larger than the opening area of the leakage path 110, exhaust gas flows into the auxiliary communication means but not into the leakage path 110.

An EGR valve 20 includes a valve housing 22, a ball valve 30, a shaft 86, a valve holder 32 held against the ball valve 30, and a valve seat 52. The valve holder 32 includes a smaller-diameter portion 38, a larger-diameter portion 40, and an annular groove 44 defined between the smaller-diameter portion 38 and the larger-diameter portion 40. The annular groove 44 is smaller in diameter than both the smaller-diameter portion 38 and the larger-diameter portion 40, A chamber 46 is defined between the annular groove 44 and the valve housing 22.

## Claims

1. A fluid passage valve comprising:
a ball valve (30, 202, 220, 230, 240, 250, 264) having a through hole (56) defined therein;
a valve housing (22, 260) having a first chamber (28) in which the ball valve (30, 202, 220, 230, 240, 250, 264) is rotatably housed, and a first fluid port (24) and a second fluid port (26), which are disposed respectively upstream and downstream of the first chamber (28) for passage of a fluid therethrough;
a shaft (86) that angularly moves the ball valve (30, 202, 220, 230, 240, 250, 264) within the first chamber (28) in order to selectively bring the first fluid port (24) and the second fluid port (26) into and out of fluid communication with each other;
a rotational drive source (106) for angularly moving the shaft (86);
a valve holder (32, 120, 130, 140, 160) disposed in the first fluid port (24) and held displaceably in sliding contact with the ball valve (30, 202, 220, 230, 240, 250, 264);
a valve seat (52) disposed in the second fluid port (26), the ball valve (30, 202, 220, 230, 240, 250, 264) being seated on the valve seat (52);
the valve holder (32, 120, 130, 140, 160) having a movable member on which the ball valve (30, 202, 220, 230, 240, 250, 264) is seatable, and a resilient member (48) that causes the movable member to press the ball valve (30, 202, 220, 230, 240, 250, 264) toward the valve seat (52), the movable member and the valve housing (22, 260) having a second chamber (46) defined therebetween for receiving unwanted substances flowing from the first fluid port (24).

2. A fluid passage valve according to claim 1, wherein the second chamber (46) comprises an annular groove (132, 134, 142, 144, 146, 162, 166) or a recess (124) defined in the movable member.

3. A fluid passage valve according to claim 2, wherein the second chamber (46) is defined by at least one wall (136, 148, 150, 164, 168), which extends perpendicularly to the direction in which the fluid flows.

4. A fluid passage valve according to claim 3, wherein the wall (136, 148, 150, 164, 168) comprises a plurality of walls defined by a plurality of annular grooves, the annular grooves being defined in the movable member along an axis thereof.

5. A fluid passage valve according to claim 3, wherein the wall (136, 148, 150, 164, 168) has an outer circumferential edge held in sliding contact with an inner circumferential wall that defines the second chamber (46).

6. A fluid passage valve according to claim 5, wherein the movable member has an outer circumferential edge having a curved shape against the inner circumferential wall that defines the second chamber (46).

7. A fluid passage valve according to claim 1, wherein any one of the ball valve (30, 202, 220, 230, 240, 250, 264), the valve holder (32), and the valve housing (22, 260) comprises an auxiliary communication means for providing fluid communication between the first chamber (28) and the first fluid port (24).

8. A fluid passage valve according to claim 7, wherein the auxiliary communication means includes an opening having a cross-sectional area greater than the cross-sectional area of the opening of a passage through which the fluid flows along the valve holder (32) toward the shaft (86).

9. A fluid passage valve according to claim 7, wherein the auxiliary communication means has an opening, a cross-sectional area of which is greater than the cross-sectional area of a gap defined between the valve holder (32) and the valve housing (22, 260).

10. A fluid passage valve according to claim 7,
wherein the auxiliary communication means communicates with a region having an opening, a cross-sectional area of which is greater than the cross-sectional area of the opening of the first fluid port (24) when the ball valve (30, 202, 220, 230, 240, 250, 264) brings the first fluid port (24) and the second fluid port (26) out of fluid communication with each other.

11. A fluid passage valve according to claim 7,
wherein the auxiliary communication means is defined in the ball valve (202) perpendicularly to the through hole (56) defined in the ball valve (202).

12. A fluid passage valve according to claim 7,
wherein the auxiliary communication means comprises at least one of a hole (222), a groove (232), a recess (242), and a passage (252, 262).

13. A fluid passage valve according to claim 1,
wherein the ball valve (202) has a first hole (204, 206) providing fluid communication between the first chamber (28) and the through hole (56).

14. A fluid passage valve according to claim 13,
wherein the valve housing (260) has a second hole (210) providing fluid communication between the first chamber (28) and the outside of the valve housing (22, 260), the second hole (210) being defined coaxially with the first hole (206), and wherein the second hole (210) is closed by a detachable plug member (208).

15. A fluid passage valve according to claim 13,
wherein the first hole (206) extends downwardly and has a tapered shape, which increases in diameter toward the through hole (56).

16. A fluid passage valve according to claim 13,
wherein the second hole (210) has an opening that opens outwardly of the valve housing (22, 260), and which is greater in diameter than an opening that opens into the first chamber (28).

17. A fluid passage valve according to claim 14,
wherein the second hole (210) has an opening that opens into the first chamber (28), and which is greater in diameter than an opening of the first hole (206) that opens into the first chamber (28).

18. A fluid passage valve according to claim 1,
wherein the fluid passage valve comprises an EGR valve (20, 122, 200) for controlling the flow rate of an exhaust gas that flows as the fluid.

19. A method of assembling a fluid passage valve including a ball valve (30, 202, 220, 230, 240, 250, 264) having a through hole (56) defined therein, a valve housing (22, 260) having a first chamber (28) in which the ball valve (30, 202, 220, 230, 240, 250, 264) is rotatably housed, and a first fluid port (24) and a second fluid port (26) which are disposed respectively upstream and downstream of the chamber (28), and a shaft (86) that angularly moves the ball valve (30, 202, 220, 230, 240, 250, 264) within the chamber (28) in order to selectively bring the first fluid port (24) and the second fluid port (26) into and out of fluid communication with each other, the ball valve (30, 202, 220, 230, 240, 250, 264) having a first hole (204, 206) providing fluid communication between the chamber (28) and the through hole (56), and the valve housing (22, 260) having a second hole (210) providing fluid communication between the chamber (28) and the outside of the valve housing (22, 260), the method comprising:
a first step of inserting a rod-shaped member (212) into the first hole (206) and the second hole (210) in order to position the ball valve (30, 202, 220, 230, 240, 250, 264) in the chamber (28);
a second step of connecting and fixing a distal end of the shaft (86) to the ball valve (30, 202, 220, 230, 240, 250, 264) after the first step;
a third step of removing the rod-shaped member (212) from the first hole (206) and the second hole (210) after the second step; and
a fourth step of fitting a plug member (208) into the second hole (210) in order to close the second hole (210) after the third step.
